# EUROPEAN PATENT APPLICATION

(11) **EP 3 865 843 A1**
(43) Date of publication of application: **18.08.2021**
(21) Application number: 20156649.4
(22) Date of filing: 11.02.2020
(51) Int. Cl.: G01M 3/20

(54) **SNIFFING GAS LEAK DETECTOR WITH HAND PROBE**

(71) Applicant: Inficon GmbH, 50968 Köln (DE)
(72) Inventor: Edvardsson, Niclas, 58216 Linköping (SE)
(74) Representative: dompatent von Kreisler Selting Werner - Partnerschaft von Patent- und Rechtsanwälten mbB

(57) **Abstract**

Gas leak detector with a hand-held sniffing probe (30), a vacuum pump (36), a gas conducting line (44) connecting the sniffing probe (30) and the vacuum pump (36), and a solid state semiconductor gas sensor (46) for directly and simultaneously analysing tracer gas components in the gas flow sucked in by the sniffing probe (30) during leak detection, wherein the gas sensor (46) is connected to the gas conducting line (44) such that a first portion (54) of the gas conducting line (44) extends from the sensor (46) to the sniffing probe (30) and a second portion (52) of the gas conducting line (44) extends from the gas sensor (46) to the vacuum pump (36), wherein the sniffing probe (30) comprises an orifice forming a suction inlet into the gas conducting line (44), and wherein the second portion (52) of the gas conducting line (44) connects the gas sensor (46) to a low pressure inlet (42) of the vacuum pump (36), while an outlet (56) of the vacuum pump (36) is connected to atmosphere characterized in that the gas sensor (46) is arranged at the location of the vacuum pump (36) such that the length of the first portion (54) of the gas conducting line (44) is larger than the length of the second portion (52) of the gas conducting line (44), and the second portion (52) of the gas conducting line (44) connects the gas sensor (46) to a low pressure inlet (42) of the vacuum pump (36), while an outlet (56) of the vacuum pump (36) is connected to atmosphere.

## Description

The invention relates to a gas leak detector with a hand-held sniffing probe.

A vacuum pump is connected to the sniffing probe via a gas conducting line, such that the vacuum pump generates a vacuum pressure resulting in a gas flow into the suction inlet of the sniffing probe and through the gas conducting line into the vacuum pump. A gas solid state semiconductor sensor is arranged to analyze the gas flowing through the gas conducting line in order to identify a specific gas component.

According to the prior art, it is common to provide the solid state semiconductor sensor within the hand-held sniffing probe which is located at a remote distance from the vacuum pump. The hand-held probe is typically moved along the surface which is to be analyzed for the presence of a possible gas leak. The gas sensor may be sensitive to such movement of the hand-held probe, which might affect the correctness of the measurement signal generated by the gas sensor. This is particularly the case with a gas sensor of the metal oxide type, such as a solid state hydrogen sensor.

In mass spectrometric gas leak detectors, such as the INFICON XL3000flex, the mass spectrometric gas detection unit is typically comprised within the main component, because it is not possible to incorporate a large and heavy mass spectrometer into the hand-held sniffing probe. The same applies with regard to gas leak detectors of the Wise Technology type, such as the INFICON Protec P3000XL. The gas detection unit comprises a helium selective permeable quartz membrane and the respective detection units are also incorporated in the main unit of the leak detector, because it is not possible to incorporate the large and heavy gas detection unit into a hand-held sniffing probe. Gas leak detectors employing a gas sensor of the solid state semiconductor type are used with sniffing probes with small sensors integrated into the hand-held probe in order to permit fast reaction times.

It is an object of the invention to improve the accuracy of a gas leak detector with a hand-held sniffing probe and a solid state semiconductor gas sensor.

The subject matter of the invention is defined by independent claim 1.

Accordingly, the gas sensor is arranged at the location of the vacuum pump close to the vacuum pump and at a remote distance from the hand-held sniffing probe and its suction inlet, such that movements of the hand-held sniffing probe do not result in movement of the gas sensor. The gas sensor analyses the gas sucked in through the suction inlet during leak detection. In particular, the gas sensor directly analyses tracer gas components in the gas flow which is continuously or periodically sucked in. Preferably, the gas sensor analyses tracer gas components in the entire gas flow, rather than separated components of the gas flow one after the other, such as in the case of a gas chromatograph sensor which separates a gas to be analysed into its separate components which are analyzed one after the other. The gas sensor of the invention, on the other hand, analayzes the tracer gas components of the gas flow simultaneously, i. e. the gas components are sensed by the sensor simultaneously, rather than subsequently.

The gas sensor is arranged at the low pressure inlet side of the vacuum pump, rather than at the outlet side of the vacuum pump, which is typically at atmospheric pressure. During operation of the vacuum pump, the low pressure inlet side is at a lower pressure than the outlet of the vacuum pump, i. e. typically at a pressure below atmospheric pressure. The gas sensor and the hand-held sniffing probe are connected by a first portion of a gas conducting line which connects the sniffing probe suction inlet at the sniffing tip of the sniffing probe with the inlet of a gas sensor. A second portion of this gas conducting line connects the outlet of the gas sensor with the inlet of the vacuum pump. The length of the first portion of the gas conducting line is larger than the length of the second portion, in order to achieve that the gas sensor is arranged close to the low pressure inlet of the vacuum pump and at a remote distance from the sniffing probe. In particular, in the case that the hand-held sniffing probe has a housing, the gas sensor is not arranged within or attached to the housing of the sniffing probe.

The vacuum pump and the gas sensor may be arranged in a common housing of the gas leak detector, such that the common housing forms a leak detector device or instrument remote from the sniffing probe and connected to the sniffing probe via the gas conducting line. The gas conducting line may be a hose.

The pump is typically operated to generate an inlet pressure of lower than 400 mbar, and preferably between 50 and 250 mbar, and a gas volume flow through the gas conducting line of approximately 20 - 3000 sccm (standard cubic centimetres per minute).

The length of the gas conducting line and, particularly, of the first portion of the gas conducting line, is below 10 meters and, preferably, below 5 meters. In addition or as an alternative, the inner diameter of the gas conducting line and, in particular, of the first portion thereof is below 5 mm, and preferably below 2 mm. This achieves an acceptably short response time of less than a few seconds between the point in time where a specific gas component to be detected enters the sniffing probe's suction inlet, and the point in time, at which the gas sensor detects the gas component.

Preferably, the gas sensor is a semiconductor sensor, such as a solid state hydrogen sensor.

The length of the second portion of the gas conducting line between the gas sensor and the inlet of the vacuum pump is preferably below 1 meter, and even more preferably below 50 cm to arrange the sensor sufficiently close to the vacuum pump and sufficiently remote from the probe.

In operation, the vacuum pump generates a vacuum pressure of below 400 mbar within the gas conducting line, such that the gas sensor analyzes gas having a pressure of below 400 mbar and, preferably, between 50 and 250 mbar.

In operation, the gas leak detector generates a suction gas flow of approximately 20 - 3000 sccm through the gas conducting line.

The orifice of the hand-held sniffing probe forms the suction inlet into the gas conducting line. The hand-held probe does not contain the gas sensor. The gas sensor is rather arranged close to the vacuum pump at the low pressure inlet of the vacuum pump. In a particularly simple form, the hand-held sniffing probe might just be the distal end portion of the gas conduction line, where the orifice is formed by the open end portion at the distal tip of the gas conducting line.

An example of the invention is explained under reference to the figures, which show:
- Fig. 1: a schematic layout of a prior art gas leak detector and
- Fig. 2: a schematic layout of an example of the invention.

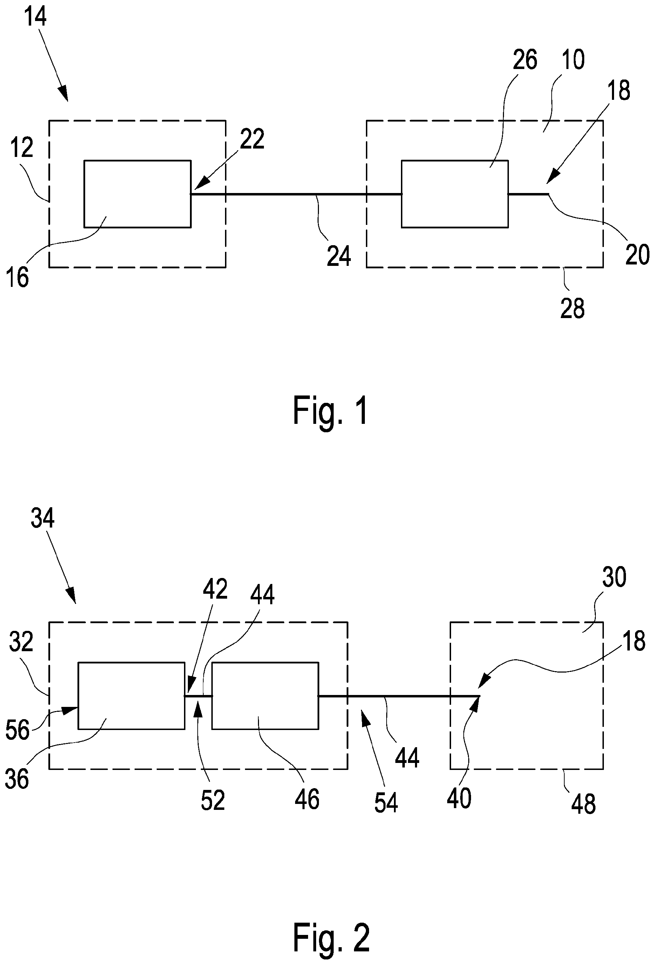

Figure 1 shows a prior art gas leak detector having a hand-held sniffing probe 10. The prior art gas leak detector comprises a housing 12 forming a gas leak detector instrument 14, which contains a vacuum pump 16. The sniffing probe 10 comprises a distal tip 18 having an orifice forming a suction inlet 20. The suction inlet 20 is connected to the inlet 22 of the vacuum pump 16 via a gas conducting line 24 formed by a hose-like fluid cable.

An important aspect of prior art gas leak detectors as shown in figure 1 is that the gas sensor 26 is arranged at or within the hand-held sniffing probe 10, i. e. such as within a housing 28 of the sniffing probe 10. The length of the gas conducting line 24 between the gas sensor 26 and the gas inlet 22 of the vacuum pump 16 is thus much larger than the length of the gas conducting line 24 between the suction inlet 20 of the sniffing probe 10 and the gas sensor 26. As a result, every movement of the hand probe 10 when moving the hand-held sniffing probe 10 along a surface to be analyzed for the presence of a possible gas leak, results in a respective movement of the gas sensor 26.

To avoid this, the invention provides the following configuration, as shown as an example in figure 2:
A housing 32 of the leak detector instrument 34 not only contains the vacuum pump 36, but also the gas sensor 46. The gas conducting line 44 connects the distal tip of the sniffing probe 30 with the inlet 42 of the vacuum pump 36. A first portion 54 of the gas conducting line 44 connects the gas sensor 46 to the suction inlet 40 at the distal tip 18 of the sniffing probe 30. A second portion 52 of the gas conducting line 44 connects the inlet 42 of the vacuum pump 36 with the gas sensor 46. The gas sensor 46 is not arranged within the housing 48 of the sniffing probe 30. The gas sensor 46 is rather connected to the inlet 42 of the vacuum pump 36 via the second portion 52 of the gas conducting line 44. The gas conducting line 44 connects the distal tip of the sniffing probe 30 with the inlet 42 of the vacuum pump 36. The length of the second portion 52 of the gas conducting line 44 is much shorter than the length of the first portion 54. A first portion 54 of the gas conducting line 44 connects the gas sensor 46 to the suction inlet 40 at the distal tip 18 of the sniffing probe 30.

The vacuum pump 36 has an outlet 56 open to atmosphere, while the inlet 42 of the vacuum pump 36 generates a vacuum pressure lower than atmospheric pressure in operation of the gas leak detector, preferably below 400 mbar.

The first portion 54 of the gas conducting line 44 may be a hose-like fluid cable. The length of the first portion 54 is lower than 10 meters, and preferably lower than 5 meters, and larger than 1 meter. The inner diameter of both portions 52, 54 of the gas conducting line 44 is approximately 0,5 mm to 2 mm. The vacuum pump generates a gas flow into the suction inlet 40 and through the gas conducting line 44 of approximately 20 - 3000 sccm.

The gas sensor 46 is a solid state semiconductor hydrogen sensor/ a tin oxide (SnO₂) sensor. A tin oxide (SnO₂) semiconductor sensor is sensitive to acceleration. In prior art detectors, such as according to figure 1, where the sensor is mounted within the hand-held sniffing probe 10, this phenomenon severely restricts the use of the probe. Movements of the probe affect the measurement signal generated by the gad sensor 26.

The idea of the invention is to move the gas sensor from the hand-held sniffing probe 10 to the leak detection instrument 34 containing the vacuum pump to avoid acceleration generated signals. As a result from the gas sensor 46 being located within the instrument 34 rather than within the probe 10, 30, the reaction time becomes longer. The reaction time corresponds with the transport time of the gas from the suction inlet 40 at the distal tip 18 of the probe 30 to the gas sensor 46 inside the instrument 34. The transport time is reduced by reducing the pressure and the inner volume of the first portion 54 of the gas conducting line 44 between the probe 30 and the gas sensor 46. The inner volume is reduced by a maximum length of the first portion 54 of 3 meters and an inner diameter of 2 mm. In an alternative embodiment, the maximum length of the first portion 54 is 5 meters and its inner diameter 2 mm. The operation pressure within the first portion 54 of the conducting line 44 is reduced to 40 - 200 torr (approximately 50 - 250 mbar) by operation of the vacuum pump 36.

An orifice is placed at the distal tip 18 of the gas conducting line 44 to form the suction inlet 40. The sensor 46 is located close to the pump 36 at its vacuum side, i. e. close to the low pressure inlet 42 of the vacuum pump 36. As a result, the measurement signal which is measured as the maximum derivative of the raw signal is maintained over the measurement range and, in addition, a faster signal response is obtained, improving the accuracy for short pulses of gas to be measured.

## Claims

1. Gas leak detector with a hand-held sniffing probe (30), a vacuum pump (36), a gas conducting line (44) connecting the sniffing probe (30) and the vacuum pump (36), and a solid state semiconductor gas sensor (46) for directly and simultaneously analysing tracer gas components in the gas flow sucked in by the sniffing probe (30) during leak detection, wherein the gas sensor (46) is connected to the gas conducting line (44) such that a first portion (54) of the gas conducting line (44) extends from the sensor (46) to the sniffing probe (30) and a second portion (52) of the gas conducting line (44) extends from the gas sensor (46) to the vacuum pump (36), wherein the sniffing probe (30) comprises an orifice forming a suction inlet into the gas conducting line (44), and wherein the second portion (52) of the gas conducting line (44) connects the gas sensor (46) to a low pressure inlet (42) of the vacuum pump (36), while an outlet (56) of the vacuum pump (36) is connected to atmosphere.
**characterized in that**
the gas sensor (46) is arranged at the location of the vacuum pump (36) such that the length of the first portion (54) of the gas conducting line (44) is larger than the length of the second portion (52) of the gas conducting line (44), and the second portion (52) of the gas conducting line (44) connects the gas sensor (46) to a low pressure inlet (42) of the vacuum pump (36), while an outlet (56) of the vacuum pump (36) is connected to atmosphere.

2. Gas leak detector of claim 1, wherein the vacuum pump (36) and the gas sensor (46) are arranged in a common housing (32) located remote from the sniffing probe (30) and connected to the sniffing probe (30) via the gas conducting line (44)

3. Gas leak detector of claim 1 or 2 wherein the vacuum pump (36) is adapted to generate a pressure lower than atmospheric pressure, preferably ca. 50 -250 mbar, while the sensor is adapted to be operated at said pressure lower than atmospheric pressure generated by the vacuum pump (36).

4. Gas leak detector according to one of the preceding claims, wherein the overall length of the gas conducting line (44) is smaller than approximately 10 meters, and preferably smaller than approximately 5 meters, and/or the inner suction diameter of the gas conducting line (44) is lower than approximately 5 mm, and preferably lower than approximately 3 mm.

5. Gas leak detector according to one of the preceding claims, wherein the gas sensor (46) is a solid state semiconductor metal oxide or tin oxide (SnO₂) sensor.

6. Gas leak detector according to one of the preceding claims, wherein the gas sensor is a hydrogen sensor.

7. Gas leak detector according to one of the preceding claims, wherein the length of the second portion (52) of the gas conducting line (44) between the vacuum pump inlet (42) and the gas sensor (46) is lower than approximately 1 meter and preferably lower than approximately 50 cm.

8. Gas leak detector according to one of the preceding claims, wherein the vacuum pump (36), the gas conducting line (44) and the orifice are adapted to generate a sniffer gas volume flow of approximately 20 - 3000 sccm through the suction inlet (40).

9. Method for gas leak detection using a gas leak detector according to one of the preceding claims, wherein the vacuum pump (36) is operated to generate an inlet pressure of below 400 mbar, wherein the gas sensor (46) directly analyzes tracer gas components in the gas flow which is continuously or periodically sucked in through the suction inlet (40) during leak detection and at a pressure of below 400 mbar.

10. Method according to claim 9, wherein the vacuum pump (36) is operated to generate a gas flow through the suction inlet (40) and through the gas conducting line (44) of approximately 20 - 3000 sccm.

11. Method according to claim 9 or 10 wherein the gas sensor (46) analyzes the entire gas flow sucked in through the suction inlet (40), rather than separated components thereof.
